# EUROPEAN PATENT APPLICATION

(11) **EP 2 130 786 A1**
(43) Date of publication of application: **09.12.2009**
(21) Application number: 08741801.8
(22) Date of filing: 06.03.2008
(51) Int. Cl.: B65D 83/00, B67D 1/04, B01D 35/02

(54) **DEVICE FOR TREATING AND PURIFYING A LIQUID PRODUCT**

(30) Priority: 13.03.2007 RU 2007109210
(71) Applicant: Obschestvo S Ogranichennoi Otvetstvennostiyu "Eurostandart", Moscow 107-497 (RU)
(72) Inventor: KISTEREV, Valeriy Evgenyevich, Moscow, 105264 (RU); ZHERDEV, Pavel Dmitrievich, Moskovskaya obl., 141021 (RU)
(74) Representative: Sonn & Partner Patentanwälte
(86) International application number: PCT/RU2008/000125
(87) International publication number: WO 2008/111876

(57) **Abstract**

The invention substantially relates to the distillery industry. The inventive device comprises a cartridge (3) with a filter and a body, which are secured on a bottle neck, and a manual pump (10) for supplying air inside the bottle.

## Description

The invention relates to the food industry, in particular to the distillery industry. The invention is intended for the individual treatment and purification of each portion of a liquid product (vodka) poured from the bottle (container) before its consumption by the consumer.

There exists a device for treatment and purification of liquid products (see US patent Nº6193886 dated 27.02.2001), containing a cartridge body connected with the neck of the bottle and filter located therein, and an air supply device.

The imperfection of the existing device is the low efficiency of the cartridge employed, caused by pushing through it of the liquid products with different levels of purification and the impossibility to use bottles with a rigid body.

The technical result achieved by this invention is the elimination of the said imperfection by creating a more comfortable and simple mechanism for provision of the required excess of the air pressure in the internal volume of the bottle with the liquid product and positioning of a filter throughout the cross section of the body of the cartridge.

The purpose of this invention is also to create a simple assembly to supply the pressurized external air into the internal volume of the vessel with a liquid.

The said result is achieved by fixing the filter above the maximum level of the liquid in a bottle, on the internal surface of the body of the device for treatment and purification of a liquid product, which contains a container, a cartridge, consisting of a body connected with the neck of the bottle and containing a filter, and an air supply device, and by that the air supply device includes a manual pump fixed on the bottle, connected with the tube which is connected with the air supply unit. The air supply unit may be formed by a tube and a through channel made in the body of the cartridge. Or by the sealing ring element placed between the body of the cartridge and the neck of the bottle, hermetically connected to the tube and with the channels made in the body of the cartridge on its internal surface and limited by the outer surface of the neck of the bottle. The body of the cartridge may be filled with the following sequentially placed filter components: rough filtering material; sorbent or a mixture thereof and fine filtering material. To prevent splashing, the outlet orifice of the body is fitted with a spreader. The assembly for connecting the body of the cartridge to the neck of the bottle may be made with a sealing holder in form of a ring lug on the internal surface of the body placement spot so as to fix it to a ring collar on the outer surface of the neck of the bottle. The cartridge is covered with the decorative cap connected to its body through a screw thread with a pilfer-proof cap or the aperture executed in a bottle tightly connected to a tube by means of tighting element. The body of the cartridge may be hermetically connected to the neck of the bottle by means of a placement spot with directional internal thread or fitting, i.e. with a connection, which ensures
that on fitting the cartridge by a machine, it will always be fitted with the through channel to a specific place on the bottle. The air pump may be made in form of an empty vessel made of elastic airtight material with fitted inlet and outlet valves. The pump is fixed on the outer surface of the bottle.

The essence of the invention is illustrated by the drawings.
Fig. 1 schematically shows the device with air inlet channel in the body of the cartridge.
Fig. 2 shows the same with threaded fixation of the body of the cartridge.
Fig. 3 schematically shows the device with air supply unit in form of a ring sealing element.
Fig. 4 shows the same with threaded fixing of the body of the cartridge.
Fig. 5 shows the device with an aperture in the bottle case is schematically represented.
Fig. 6 shows the same with carving fastening of the case of a cartridge.

The device contains three main components besides the vessel: the treatment and purification assembly; the air supply device with a mechanism for formation of the excessive pressure inside the vessel and the air supply unit.

The treatment and processing assembly consists of: a decorative sealing cap 1 with an internal thread 2 for screwing onto the body 3 of a cartridge; an encapsulating element 4 made of elastic plastic in two versions of the device; the cartridge, whose body has a spot 5 for placement onto the neck of the bottle, a limitation spreader 6 with flow channels, the thread 2 on the outer side for screwing the sealing cap and a cavity, in which a rough filtering material 7, a sorbent 8 or a mixture thereof and a fine filtering material 9 are sequentially placed.

The air supply means with a mechanism for formation of the required pressure in the interior of the bottle comprise a vessel 10 made of elastic material with inlet 11 and outlet 12 valves, that is, a press air pump. The pump

is located inside the bottle and organically fits the bottle configuration in accordance with the design of the product.

The air supply unit consists of: an air supply tube 13 and a channel 14 in the body of the cartridge, hermetically connected to the tube. Through them the pressurized external air is supplied from the air pump through the release valve into the interior of the bottle 15.

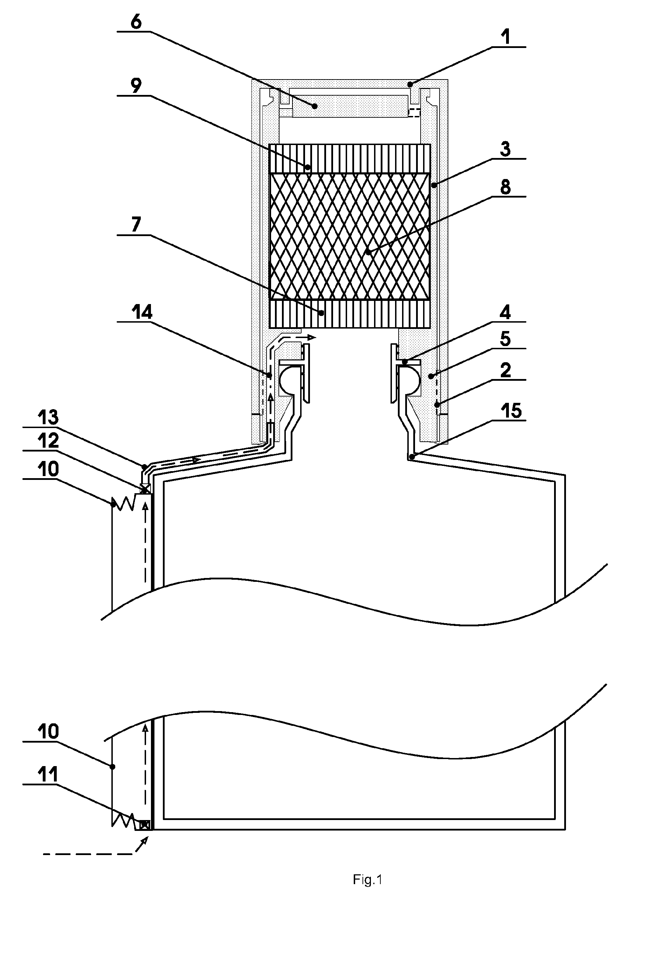

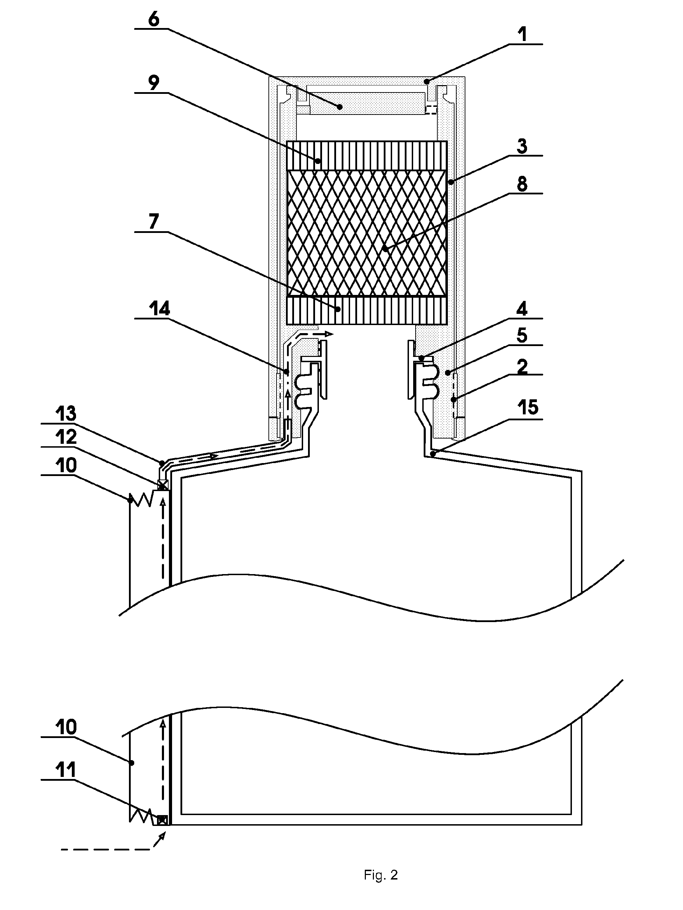

The device shown in Figs. 1 and 2 operates as follows.

A sealed bottle of vodka is taken in hands and opened by unscrewing the decorative cap 1 and is turned upside down over the drinking vessel. The vodka, contained in the bottle is poured through the orifice in the encapsulating element 4 to the rough filtering material 7, part thereof, under the effect of gravitational forces, passes through it and enters the space in the cartridge filled with sorbent 8 or a mixture thereof, which provide the required level of vodka treatment. Having passed through the sorbent 8, the vodka is unable to pass through the fine filtering material 9 by the mere action of the gravitational forced due to decrease of the air pressure in the interior of the bottle 15 due to the air inside becoming rarefied and due to a strong overall resistance of the filtering materials 7 and 9 and the sorbent 8. To push the vodka through the filtering materials and the sorbent, the consumer presses the vessel of the air pump, which has a large volume in its initial state. The inlet valve 11, under the effect of pressure inside the air pump vessel is closed and outlet valve 12 is opened, and as a result of which, the air from

the pump, through the tube 13, the air supply channel 14 in the body of the cartridge and the orifice in the encapsulating element, is supplied into the interior of the bottle. The user continues to press on the vessel of the air pump till the pressure inside the bottle is sufficient to push the vodka through the filtering materials and the sorbent and until the required speed or pouring is achieved. Having filled the drinking vessel with the treated vodka, the consumer stops pressing the air pump vessel and turns the bottle with its neck up. The excessive air pressure in the bottle will push part of the vodka from the space filled with sorbent, through the filtering material 9 into the space in the body of the cartridge above it, limited by the restrictive spreader 6, while the residual pressure is released through the vodka flow channels in the restrictive spreader of the cartridge outside. The restrictive spreader configuration prevents vodka splashes produced by pressure release. The release valve shuts down, thus restricting the air access into the bottle. The decorative sealing cap is screwed onto the body of the cartridge using the threaded connection and encapsulates the bottle. The remaining vodka from the cartridge, under the effect of gravitational forces, gradually flows back into the bottle. The operation may be repeated as required.

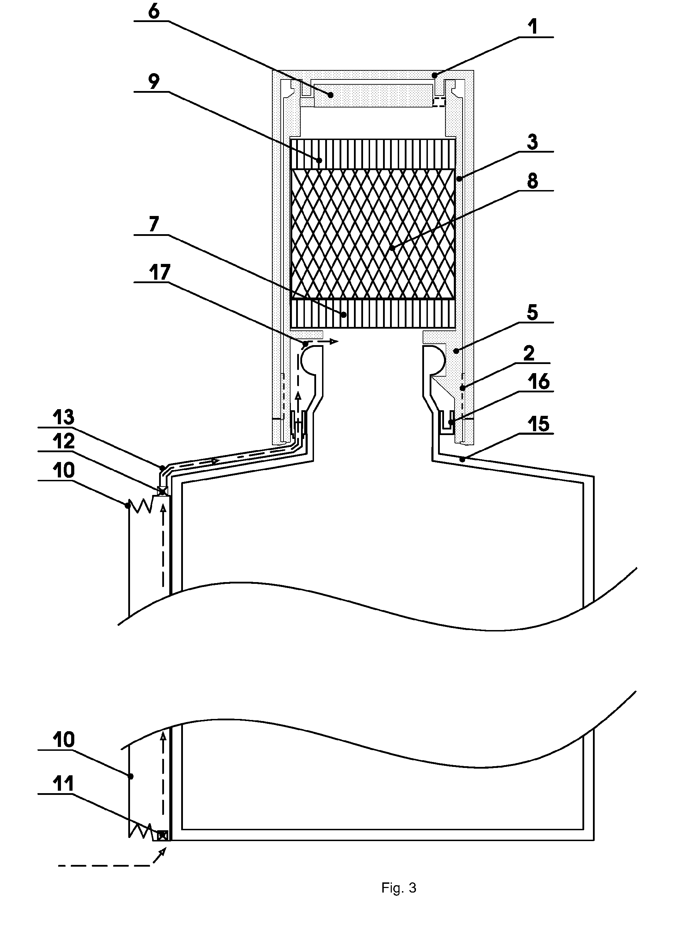

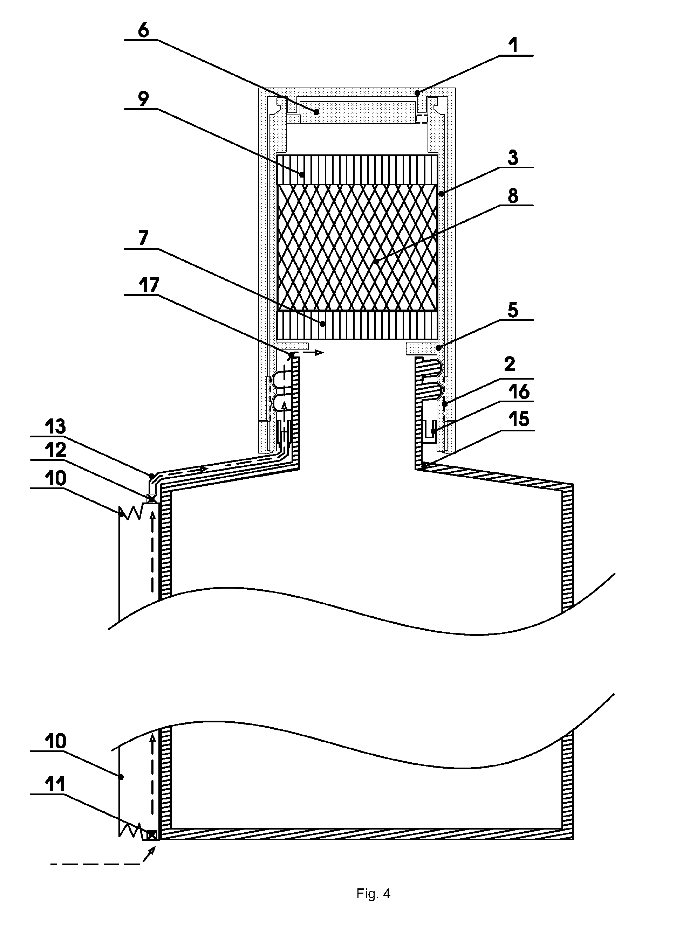

The second example of the device implementation is shown in Figs. 3 and 4.

The air supply unit in the second version consists of: the air supply tube 13; a ring seal 16 and air channels 17 connected to it. The channels are made in the elements of the internal surface of the body of the cartridge, along the external surface of the neck of the bottle 15, through which the pressurized external air from the vessel of the press air pump is supplied into the interior of the bottle 15.

The device shown in Figs. 3 and 4 is operated similarly to the first option.

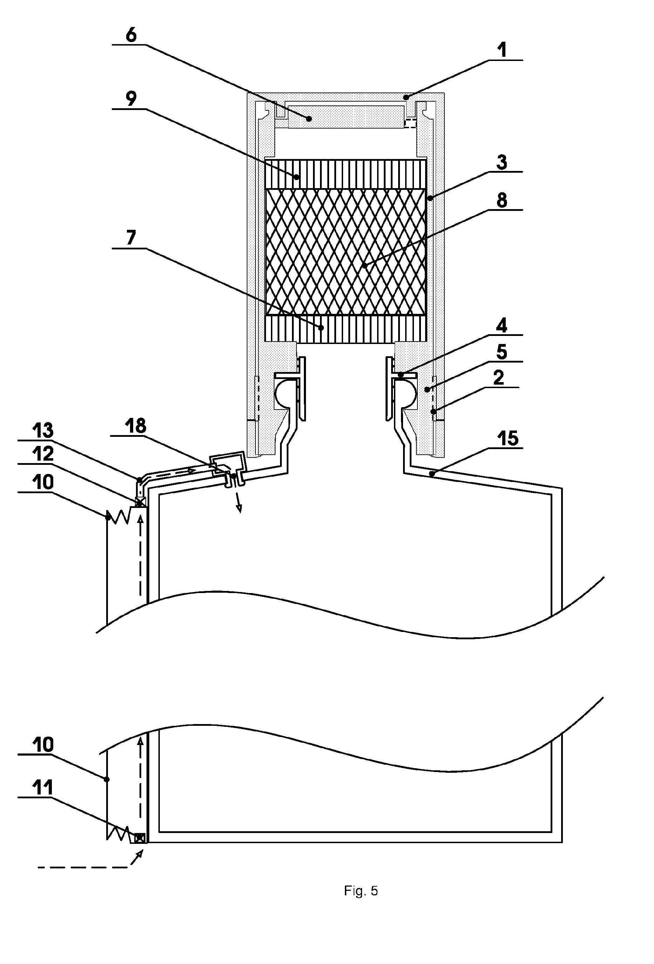

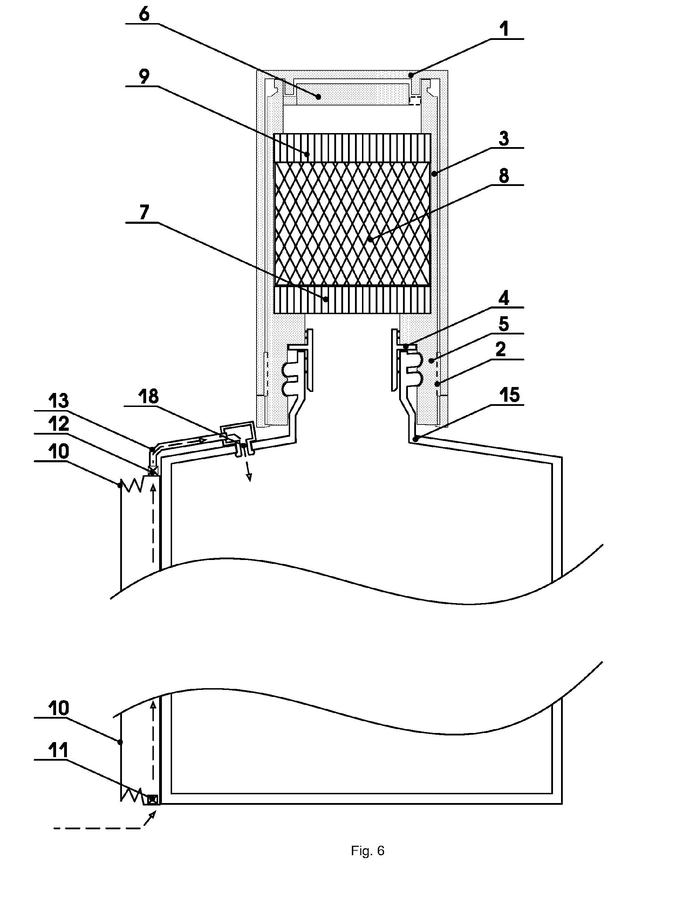

The third example of performance of the device is presented in Figs. 5 and 6.

The point of supplying air in the third variant consists of a specially organized aperture in a bottle tightly by means of a sealing element 18 connected to airconducting 13 tube through which air of environment from capacity of the air press pump under pressure arrives in an internal cavity of the bottle 15.

Operation of the device represented on Figs. 5 and 6 it is carried out similarly to first two variants.

## Claims

1. Device for treatment and purification of a liquid product located in a bottle, containing a cartridge, comprising a body connectable to the neck of the bottle and a filter located inside the body, an air supply means, **characterized in that** the filter is fixed on the interior surface in the body, and the air supply means includes a hand air pump, connected to a tube, which is hermetically connected to the through channel made in the body of the cartridge or hermetically connected by means of a sealing element aligned with the channels made on the internal surface of the body of the cartridge and limited by the external surface of the neck of the bottle.

2. The device according to claim 1, **characterized in that** the point of supplying air is formed by an additional aperture executed in the bottle and tightly connected to a tube.

3. The device according to claim 1, **characterized in that** the filter is formed of the sequentially placed rough filtering material, sorbent or a mixture thereof and a fine filtering material.

4. The device according to any one of claims 1 to 3, **characterized in that** the outlet orifice on the body is fitted with a spreader.

5. The device according to any one of claims 1 to 3, **characterized in that** the body of the cartridge is hermetically connected to the neck of the bottle using the placement spot with directional internal thread.

6. The device according to any one of claims 1 to 3, **characterized in that** the body of the cartridge is hermetically connected with the neck of the bottle using the placement spot with a fitting.

7. The device according to any one of claims 1 to 3, **characterized in that** the means to connect the body to the neck of the bottle is made in form of a lock holder.

8. The device according to any one of claims 1 to 3, **characterized in that** it has a decorative cap hermetically fitted on the body.

9. The device according to claim 8, **characterized in that** the cap is fitted on the body using a thread with a pilfer-proof cap.

10. The device according to any one of claims 1 to 3, **characterized in that** the hand air pump is made in form of an empty vessel made of elastic airtight material with embedded inlet and outlet valves, fixed on the external surface of the bottle.
